# EUROPEAN PATENT SPECIFICATION

(11) **EP 2 657 821 B1**
(45) Date of publication and mention of the grant of the patent: **25.02.2015**
(21) Application number: 12165810.8
(22) Date of filing: 26.04.2012
(51) Int. Cl.: G06F 3/0488, G06F 3/0481

(54) **Method and apparatus pertaining to the interpretation of touch-based actions**
Verfahren und Vorrichtung zur Auslegung von berührungsbasierten Aktionen
Procédé et appareil concernant l'interprétation des actions tactiles

(43) Date of publication of application: 30.10.2013
(73) Proprietor: BlackBerry Limited, Waterloo, ON N2K 0A7 (CA)
(72) Inventor: Griffin, Jason Tyler, Waterloo Ontario N2L 3W8 (CA); Mahan, Laura, Kanata Ontario K2K 3K1 (CA)
(74) Representative: Fennell, Gareth Charles

(56) References cited:
- WO-A2-2007/089766
- GB-A- 2 450 207

## Description

### Field of Technology

The present disclosure relates to electronic devices, including but not limited to portable electronic devices having touch-sensitive displays.

### Background

Electronic devices, including portable electronic devices, have gained widespread use and may provide a variety of functions including, for example, telephonic, electronic messaging, and other personal information manager (PIM) application functions. Portable electronic devices include, for example, several types of mobile stations such as simple cellular telephones, smart telephones, wireless personal digital assistants (PDAs), and tablet and laptop computers with wireless I.E.E.E. 802.11-family, BLUETOOTH^{™}, and/or cellular-telephony capabilities.

Portable electronic devices are generally intended for handheld use and ease of portability. Smaller devices are generally desirable for portability. A touch-sensitive display, also known as a touch-screen display, is particularly useful on handheld devices, which are small and have limited space for user input and output.

Many such devices offer a focused user-interface experience that relies virtually solely upon the user's interaction with a touch-screen display. In many of these cases the native user-interface experience eschews use or even availability of a cursor-based interface by which a user can select or otherwise manipulate or interact with displayed objects and elements.

WO 2007/089766 describes methods of gesturing with a multipoint sensing device. GB2450207 describes gestures for converting from a position control mode to a motion continuation mode for a cursor, in which the user's fingers can be moved around to effect position control of the cursor.

Improvements in devices with touch-sensitive displays are desirable.

### Summary

Aspects of the present disclosure are defined in the accompanying independent claims.

### Brief Description of the Drawings

FIG. 1 is a block diagram in accordance with the disclosure.
FIG. 2 is a flow diagram in accordance with the disclosure.
FIG. 3 is a top-plan schematic view in accordance with the disclosure.
FIG. 4 is a top-plan schematic view in accordance with the disclosure.
FIG. 5 is a top-plan schematic, detail view in accordance with the disclosure.
FIG. 6 is a top-plan schematic, detail view in accordance with the disclosure.
FIG. 7 is a top-plan schematic, detail view in accordance with the disclosure.
FIGS. 8-1 through 8-3 are top-plan schematic, detail views in accordance with the disclosure.
FIGS. 9-1 and 9-2 are top-plan schematic, detail views in accordance with the disclosure.
FIG. 10 is a block diagram in accordance with the disclosure.

### Detailed Description

The following describes an apparatus and method pertaining to a device having a touch-screen display and a corresponding control circuit. By one approach the control circuit is configured to, in a shared mode of operation, interpret a first touch-based action as a cursor-control instruction while also interpreting a second touch-based action as a multi-touch gesture. (As used herein, this reference to a "shared mode of operation" will be understood to refer to a mode of operation that will support, at the same time, both cursor-based inputs (including but not limited to the movement of a cursor as well as cursor-based selecting, dragging, and so forth) as well as cursor-free (but display location based) inputs (including but not limited to finger-based taps, swipes, pinches, and so forth.) So configured, for example, the device can supplement a native cursor-free user-interface approach with a cursor-based selection-and-movement capability that is also responsive to touch-based interactions.

By one approach the aforementioned first touch-based action can comprise simultaneously touching the touch-screen display with two fingers that are spaced only within a predetermined range of each other. In such a case, for example, these teachings can provide for displaying a cursor between those two fingers and then permitting the user to move that cursor on the touch-screen display when the user moves at least one of those fingers on the touch-screen display to a subsequent location. By another approach the device can effect a cursor-based selection action upon detecting, for example, a momentary touch on the touch-screen display.

The aforementioned second touch-based action can comprise, for example, the user moving those two fingers further apart from one another. This action can comprise, by one approach, moving the fingers beyond a predetermined range from one another. When this occurs, the device can respond by interpreting that action (or one or more corresponding follow-on actions) as a multi-touch gesture.

These teachings are highly flexible in practice and will accommodate a wide variety of variations as well as combinations in these regards. For example, the control circuit can also operably couple to an external touch-based interface (that links, for example, to a touchpad user interface) and can, notwithstanding being configured to natively interact with a user via a cursor-free touch-based interface, also be configured to interpret touch-based inputs received via the external touch-based interface to effect cursor-based user selections.

So configured, these teachings permit a device having a cursor-free user interface to nevertheless accommodate cursor-based user interactions. This interface, in turn, can facilitate ease of use when employing such a device as a front-end to a remotely-located resource that relies upon cursor-based interactions with the user. Such an approach greatly leverages the large number of existing resources and devices in such regards and supports the continued viability of such modalities while also supporting and permitting users the flexibility of selecting a platform that does not ordinarily natively rely upon cursor-based user interactions. These teachings are economically deployable and are readily scaled to accommodate a wide variety and number of differing devices, user interfaces, cursor-based user interactions, and/or multi-touch gestures.

By way of illustrative example, these teachings will permit a device such as a smartphone, which ordinarily does not locally support a cursor-based user-interface modality, to nevertheless effect a cursor-controlled style of interaction when remotely accessing in real time a word-processing program that is executing on a remotely-located personal computer. As another illustrative example, these teachings will permit a device such as a smartphone, which again ordinarily does not locally support a cursor-based user-interface modality, to nevertheless effect a cursor-controlled style of interaction when working with a local program that itself does not ordinarily presume or support a cursor-based style of interaction.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

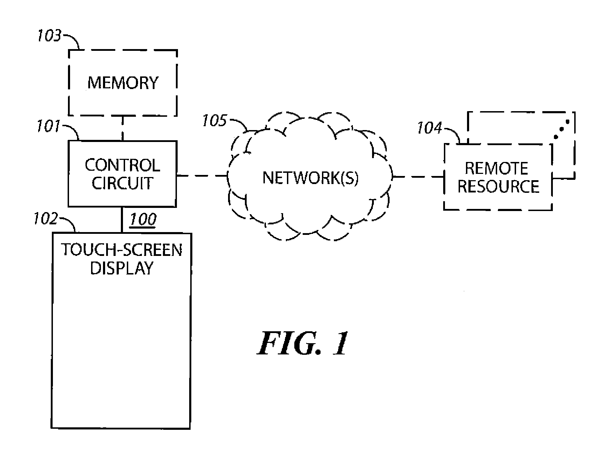

FIG. 1 presents an example apparatus 100 configured in these regards. Generally speaking this apparatus 100 can comprise any of a wide variety of user devices including, for example but without any limitations in these regards, laptop computers, tablet computers, personal digital assistants, so-called smartphones and other portable two-way communications devices, and so forth. For the sake of an illustrative example, but again without intending any particular limitations by this specificity, the remainder of this description will presume the apparatus 100 to be a tablet-based computer having some wireless two-way communications connectivity (such as BLUETOOTH^{™}, Wi-Fi, cellular telephony, and so forth).

More specifically, the apparatus 100 includes a control circuit 101 that operably couples to a touch-screen display 102. Such a control circuit 101 can comprise a fixed-purpose hard-wired platform or can comprise a partially or wholly-programmable platform. These architectural options are well known and understood in the art and require no further description here. This control circuit 101 is configured (for example, by using corresponding programming as will be well understood by those skilled in the art) to carry out one or more of the steps, actions, and/or functions described herein.

This apparatus 100 may also include memory 103, if desired. This memory 103 may be integral to the control circuit 101 or can be physically discrete (in whole or in part) from the control circuit 101 as desired. Such a memory 103 can serve, for example, to non-transitorily store computer instructions that, when executed by the control circuit 101, cause the control circuit 101 to behave as described herein. As used herein, this reference to "non-transitorily" will be understood to refer to a non-ephemeral state for the stored contents (and hence excludes when the stored contents merely constitute signals or waves) rather than volatility of the storage media itself and hence includes both nonvolatile memory (such as read-only memory (ROM) as well as volatile memory (such as an erasable programmable read-only memory (EPROM).

The touch-screen display 102 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display, for example, typically includes a capacitive touch-sensitive overlay. This overlay may be an assembly of multiple layers in a stack including, for example, a substrate, a ground shield layer, a barrier layer, one or more capacitive touch sensor layers separated by a substrate or other barrier, and a cover. The capacitive touch sensor layers, in turn, may be any suitable material, such as patterned indium tin oxide (ITO).

One or more touches (by, for example, an end-user's finger or other implement of choice), also known as touch contacts or touch events, may be detected by the touch-screen display 102. The control circuit 101 may determine attributes of the touch, including a location of the touch. Touch-location data may include an area of contact or a single point of contact, such as a point at or near a center of the area of contact. The location of a detected touch may include x and y components, e.g., horizontal and vertical components, respectively, with respect to one's view of the touch-screen display 102. For example, the x location component may be determined by a signal generated from one touch sensor, and the y location component may be determined by a signal generated from another touch sensor. One or more signals are provided to the control circuit 101 in response to detection of a touch. A touch may be detected from any suitable contact member, such as a finger, thumb, appendage, or other objects (such as, for example, a stylus, pen, or other pointer, depending on the nature of the touch-screen display 102). Multiple simultaneous touches may be detected.

In this illustrative example, the apparatus 100 does not offer a native, dedicated user-manipulable cursor-control interface such as a mouse, trackball, joystick, or the like. Instead, the control circuit 101 utilizes and supports applications that presume the lack of cursor presence and manipulation and utilizes instead cursor-free touch-based interaction opportunities. These interaction opportunities can include, for example, presenting one or more icons that a user can individually select by touching the icon of interest. Selecting a particular icon, in turn, can then result in a presentation of additional touch-selectable opportunities to make further selections and/or to enter data or the like.

That said, and again for this purposes of illustration, in this example the apparatus 100 communicatively couples to one or more remote resources 104 via one or more intervening networks 105 (including but not limited to the Internet, a wireless last-mile edge network, and so forth). The apparatus 100 has access to functionality via such a remote resource 104 that is not otherwise available at the apparatus 100 itself. For example, a given remote resource 104 can offer word-processing capability, spreadsheet capability, database capability, and so forth. Such capabilities, however, often presume the use of a cursor to facilitate the end-user's interaction with the supported functionality. When the resource comprises, for example, a word processor, a cursor permits the end user to select text insertion points, text to be copied, deleted, or modified, and so forth.

The present teachings will permit the apparatus 100 to operate compatibly and readily with such cursor-based remote capabilities notwithstanding that the apparatus 100 ordinarily presumes cursor-free touch-based interactions.

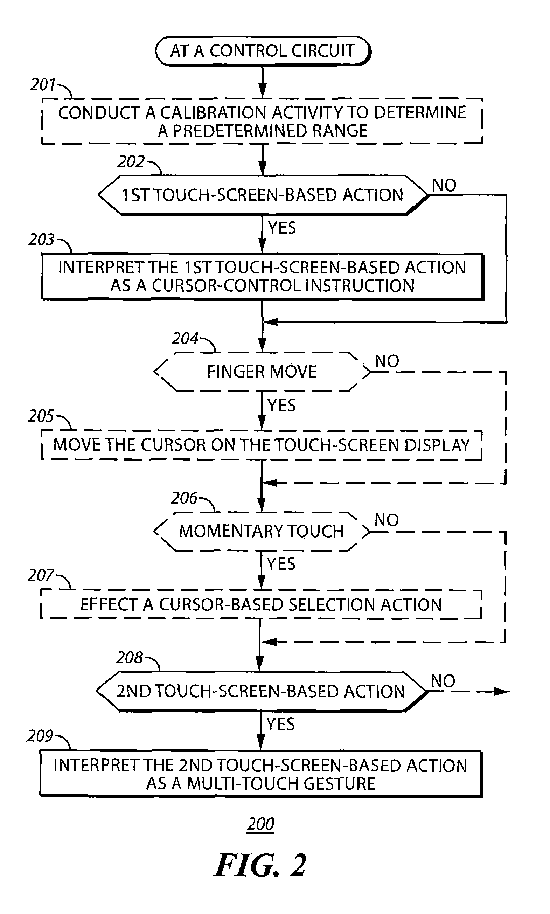

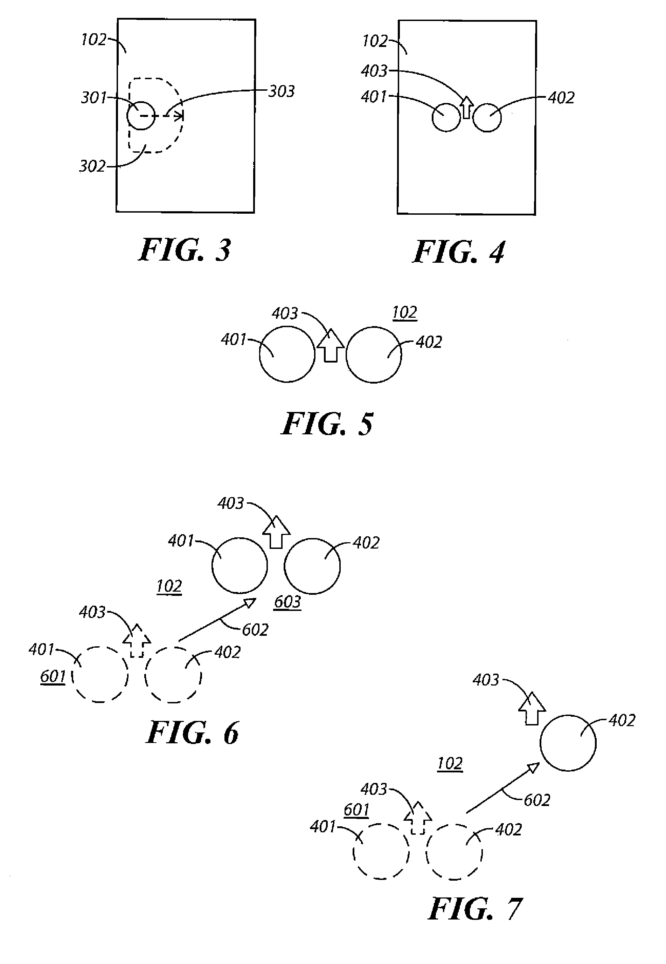

Referring now to FIG. 2, an illustrative corresponding process 200 in these regards can optionally provide for conducting 201 a calibration activity to determine, for example and at least in part, a predetermined range. Referring momentarily to FIG. 3, this predetermined range can comprise a particular distance 303 from the geometric center (or, if desired, from the edge) of a touch 301 on the touch-screen display 102 that, in turn, can effectively define a particular area 302 on the touch-screen display 102.

In such a case, this calibration activity can comprise, for example, having the end user place two adjacent fingertips on the touch-screen display 102 during a learn mode of operation. (As used herein, learning will be understood to refer to a dedicated state during which the apparatus is specifically rendered open to changes with respect to its usual operating behaviors. These changes can include, for example, changes to operating parameters or changes to operational requirements that dictate when and/or how the device responds to certain stimuli during its ordinary mode of operation.) The detected distance between the two fingertips with respect to one another can serve to determine the aforementioned predetermined range and/or the corresponding particular area 302.

In any event, and referring again to FIG. 2, this process 200 provides for then detecting 202 a first touch-screen-based action. This detection can comprise, for example, detecting two discrete, simultaneous touch events (such as two fingertips both touching the touch-screen display 102 at the same time) that are within the aforementioned predetermined range of one another. (This reference to "simultaneous" does not require that the two touch events being wholly and exactly synchronized with one another. Instead, it can be sufficient, for example, that a first touch event begin and then persist while a second, subsequent touch event begins and persists for at least some minimal time simultaneously with the first touch event.)

By one approach, detection of a first touch-screen-based event can require both that there are two requisite touch events within the predetermined distance from one another and that this circumstance persist for at least some predetermined amount of time. The specific required duration of time can vary with the needs of the application setting. Examples include, but are not limited to, durations of 0.1 seconds, 0.3 seconds, 0.5 seconds, 1.0 seconds, and so forth.

This process 200 then provides for interpreting 203 that first touch-screen-based action as a cursor-control instruction. Referring to FIG. 4, this cursor-control instruction can comprise, for example, displaying a cursor 403 between the end-user's two fingers 401 and 402. By one approach (and as illustrated), this displaying can comprise placing the cursor 403 literally between the two fingers 401 and 402. Such an approach can be useful, for example, when the predetermined range is sufficient to allow room for the cursor 403 to be usefully presented in such a fashion.

By another approach, and as illustrated in FIG. 5, this displaying can comprise placing the cursor 403 between the two fingers 401 and 402 in an offset position other than directly between the two fingers 401 and 402. This approach can be useful, for example, when the predetermined range is insufficient to allow room for the cursor 403 to be usefully presented.

These teachings will also permit the location of the cursor 403 with respect to the fingers 401 and 402 to be dynamically determined if desired. Such an approach can be useful when the predetermined range is sufficient to accommodate either of the finger positions illustrated in FIGS. 4 and 5. In such a case, when the space between the fingers 401 and 402 is automatically determined by the control circuit 101 to be inadequate to present the cursor 403, the control circuit 101 can automatically decide to display the cursor 403 other than directly between the fingers 401 and 402. Conversely, when the space between the fingers 401 and 402 is sufficient to accommodate the cursor 403, the control circuit 101 can automatically determine to place the cursor 403 directly between the fingers 401 and 402.

Of course, the present teachings will accommodate a wide variety of approaches in these regards. For example, such a cursor 403 could instead be displayed directly above, below, or to the side of either finger 401 or 402 rather than being more centrally disposed as illustrated.

Generally speaking, so configured, upon detecting a particular touch-screen-based action, the control circuit 101 automatically adopts a cursor-based interface protocol even though the apparatus 100 lacks a cursor-control mechanism and the control circuit 101 more ordinarily presumes to use a non-cursor-based user-interaction modality. As described, this first touch-screen-based action comprises the simple act of effecting two touch events (using, for example, two more-or-less side-by-side fingertips) sufficiently proximal to one another (both in time and on the touch-screen display 102). These teachings will accommodate other touch-screen-based actions to trigger the aforementioned behavior, including additional simultaneous touch events and/or a series of physically and temporally discrete touch events as desired.

Having so invoked a cursor-control modality, the control circuit 101 can then take any of a variety of follow-on actions as appropriate. By way of a first illustration and referring to FIGS. 2 and 6, the control circuit 101 can detect 204 movement (as represented by the arrow denoted by reference numeral 602) of the two aforementioned fingers 401 and 402 across the surface of the touch-screen display 102 and responsively move the fingers 401 and 402 from a first location 601 to a second location 603. In such a case, the control circuit 101 can move 205 the cursor 403 on the touch-screen display 102 to track the detected movement of the fingers 401 and 402.

Again, these teachings will accommodate a variety of approaches in such a case. As one illustrative example in such regards, and referring to FIG. 7, the control circuit 101 may be configured to similarly track finger movement and provide for a corresponding responsive movement of the cursor 403 even when the user lifts one finger 401 and moves only one of the fingers 402. Such an approach may be useful, for example, when the touch-screen display 102 is relatively small and it may be helpful to occlude less of the display by requiring only that a single finger remain in contact with the touch-screen display 102.

So configured, the control circuit 101 permits the user to move the cursor 403 to a different location on the touch-screen display 102. The ability to selectively move a cursor, of course, comprises a basic tool when utilizing an application that is designed for use with cursor-based interactions.

Another useful cursor-based interaction is selecting a button, icon, field, link, or the like that the cursor presently identifies or is otherwise associated with. When using a mouse, one often indicates such a selection by clicking an electro-mechanical button. These present teachings, however, will accommodate other approaches in such regards.

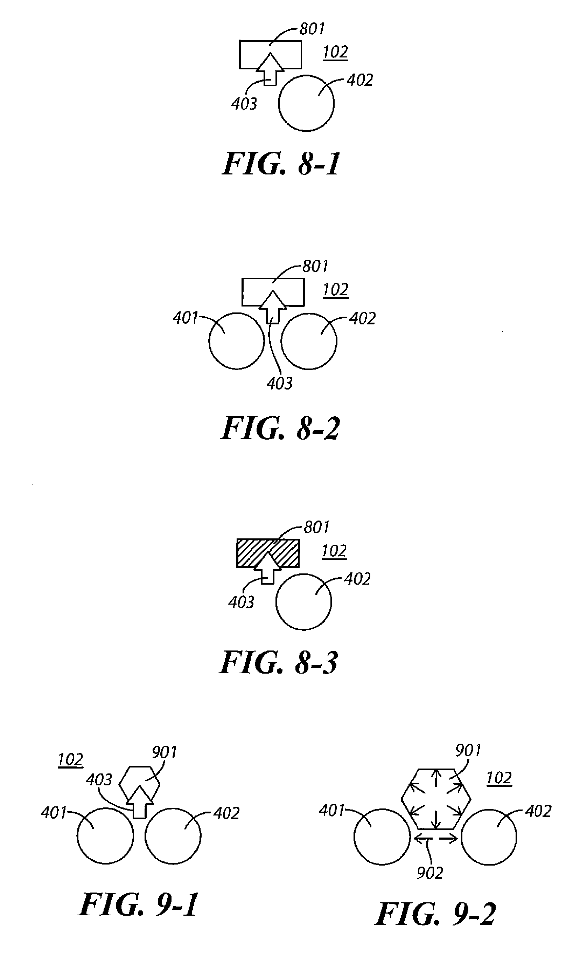

By way of illustration, and referring now to FIGS. 2 and 8-1 through 8-3, this process 200 can optionally provide for detecting 206 a momentary touch on the touch-screen display 102. Upon detecting 206 this momentary touch, the control circuit 101 can responsively effect 207 a cursor-based selection action (akin, for example, to the aforementioned click of a mouse button).

Referring specifically to FIG. 8-1, at the beginning of this action the cursor 403 is associated (by, in this example, overlying) a displayed icon 801 (presumably because the user has previously moved the cursor 403 as described above to this juxtaposition with the icon 801) and only a single finger 402 presently touches the touch-screen display 102. Referring to FIG. 8-2, the user now momentarily places a second finger 401 on the touch-screen display 102 (in this case, within the aforementioned predetermined distance) and then lifts that second finger 401, leaving only the original finger 402 as shown in FIG. 8-3. In this example the control circuit 101 1 responds to this sequence of events by selecting the icon 801 (the same as if the icon 801 had been selected via a click of a mouse button).

These teachings will accommodate a wide range of variations in these regards. It may be required, for example, that the momentary tap of the one finger be completed within a predetermined period of time in order for the control circuit 101 to conclude that the detected action represents a selection input. As another example, the control circuit 101 may be configured to detect whether the user executed a left-side tap or a right-side tap (by tapping, for example, the left-side finger or the right-side finger, respectively). In such a case, the particular selection input can be characterized the same as a so-called left-click or right-click as is available via a typical mouse.

And as yet another example of the flexibility of these teachings, the control circuit 101 can be configured to detect when the user maintains screen contact with one finger while moving the other finger smoothly up or down on the touch-screen display 102. When this occurs, the control circuit 101 can respond by treating that input as being akin to the use of a mouse's scroll wheel. In such a case, for example, the speed of the finger movement can provide information regarding how quickly or slowly the control circuit 101 should, for example, scroll the display.

So configured, the apparatus 100 can support any number of cursor-based actions using only a touch-screen display 102. This, in turn, permits such an apparatus 100 to compatibly support the use of an application that essentially requires as least some cursor-based inputs (such as, but not limited to, cursor-based applications that the apparatus 100 remotely accesses.)

That said, however, these teachings will also support retaining the non-cursor-based functionality of the apparatus. To switch back from the aforementioned cursor-based capability, for example, this process 200 can provide for detecting 208 a second touch-screen based action and responding by interpreting 209 that action as a multi-touch gesture rather than as a cursor-related instruction.

FIGS. 9-1 and 9-2 provide a simple illustrative example in these regards. FIG. 9-1 shows that the user has two fingers 401 and 402 on the touch-screen display 102 (and, in this example, within the aforementioned predetermined distance of one another). The corresponding cursor 403 is visually associated with a given image 901.

Referring now to FIG. 9-2, the user spreads those two fingers 401 and 402 apart laterally from one another (as represented by the arrowed line denoted by reference numeral 902). At some point the two fingers 401 and 402 move sufficiently far apart to exceed the aforementioned predetermined distance and having reached and/or exceeded that point can serve as the second touch-screen-based action that prompts the control circuit 101 to now interpret the action as a multi-touch gesture. In this example this multi-touch gesture comprises causing the corresponding image 901 to enlarge as the distance between the fingers 401 and 402 grows.

By one approach the strengths of both cursor-based and non-cursor-based interactions can be combined and leveraged. In the example shown in FIGS. 9-1 and 9-2, for example, the image 901 that the control circuit 101 enlarges can be identified by the location of the cursor 901. By permitting the user to use the cursor 901 to locationally key the locus of a multi-touch gesture, a greater degree of selectivity may be achieved than might ordinarily be expected using a touch-screen display 102.

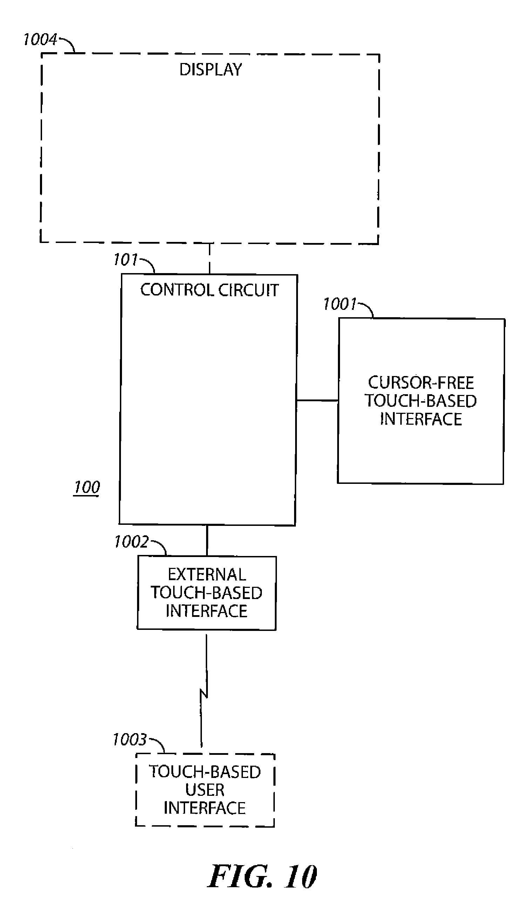

FIG. 10 provides another illustrative example as regards the flexibility of these teachings. In this example, the control circuit 101 (which might comprise, for example, a smartphone's control circuit) operably couples to a cursor-free touch-based interface 1001 (such as the aforementioned touch-screen display 102) as well as to an external touch-based interface 1002 (such as an interface providing a Bluetooth connection to a physically discrete touch-based user interface 1003, such as a traclcpad). So configured, a cognitive disconnect can arise between the images the user sees and the location of their touches because the touch surface is physically (and hence visually) separate and discrete from the displayed images.

This cognitive disconnect can become more pronounced as the physical separation between the touch surface and the displayed image grows. For example, the apparatus 100 may comprise a tablet-based device that is coupled via a wireline connection to an external display 1004 (such as, for example, a television display or the display of a tablet-styled device). In such a case the displayed images may be a few feet away or even on another side of the room from the user and their trackpad.

In such a case the control circuit 101 can be configured to interpret touch-based inputs received via the external touch-based interface 1002 to effect cursor-based user selections. This operating paradigm and these cursor-based user selections can be applied with respect to both native and non-native applications and with respect to applications that do not necessarily otherwise support cursor-based interactions.

By presenting a cursor on the display in such an operating scenario, however, the user now has a positive and clear point of reference to guide their manipulations of the physically-discrete touch-based user interface 1003. For example, as their finger moves on the touch-based user interface 1003, so too can the cursor move as well. When then executing, for example, a gesture such as a zoom command, the user can be confident that the image they are expanding is the correct image because the expansion can pertain to an image that is presently associated with the location of the cursor.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a touch-screen display (102);
a control circuit (101) operably coupled to the touch-screen display, wherein the control circuit is configured to:
interpret (203) a first touch-based action that comprises simultaneously touching the touch-screen display with two fingers spaced within a predetermined range of each other as a cursor-control instruction;
**characterised in that**:
the cursor-control instruction includes displaying a cursor between the two fingers that are touching the touch-screen display;
and
the control circuit is further configured to move the cursor on the touch-screen display when one of the two fingers is lifted from the touch-screen display and the remaining finger is then moved on the touch-screen display, the movement of the cursor corresponding to the tracked finger movement on the touch-screen display.

2. The apparatus of claim 1 wherein the control circuit is configured to effect a cursor-based selection action upon detecting a momentary touch on the touch-screen display.

3. The apparatus of claim 1 wherein the control circuit is configured to effect a multi-touch gesture when the two fingers move outside the predetermined range of each other.

4. The apparatus of claim 3 wherein the multi-touch gesture is locationally keyed on the cursor.

5. A method comprising:
at a control circuit (101) :
interpreting (203) a first touch-screen-based action that comprises simultaneously touching the touch-screen display with two fingers spaced within a predetermined range of each other as a cursor-control instruction;
**characterized in that**:
the curcor control instruction includes displaying a cursor between the two fingers that are touching the touch-screen display;
and
the cursor is moved on the touch-screen display when one of the two fingers is lifted from the touch-screen display and the remaining finger is then moved on the touch-screen display, the movement of the cursor corresponding to the tracked finger movement on the touch-screen display.

6. The method of claim 5 further comprising:
effecting a cursor-based selection action upon detecting a momentary touch on the touch-screen display.

7. The method of claim 5 further comprising:
conducting a calibration activity to determine, at least in part, the predetermined range.

## Patentansprüche

1. Eine Vorrichtung, die aufweist:
eine Berührungsbildschirmanzeige (102);
eine Steuerschaltung (101), die betriebsfähig mit der Berührungsbildschirmanzeige gekoppelt ist, wobei die Steuerschaltung konfiguriert ist zum:
Interpretieren (203) einer ersten Berührungs-basierten Aktion, die ein gleichzeitiges Berühren der Berührungsbildschirmanzeige mit zwei beabstandeten Fingern innerhalb eines vorgegebenen Bereichs voneinander als eine Cursor-Steueranweisung aufweist;
**dadurch gekennzeichnet, dass**:
die Cursor-Steueranweisung ein Anzeigen eines Cursors zwischen den zwei Fingern umfasst, die die Berührungsbildschirmanzeige berühren; und
die Steuerschaltung weiter konfiguriert ist zum
Bewegen des Cursors auf der Berührungsbildschirmanzeige, wenn einer der zwei Finger von der Berührungsbildschirmanzeige angehoben wird und der verbleibende Finger dann auf der Berührungsbildschirmanzeige bewegt wird, wobei die Bewegung des Cursors der Bewegung des verfolgten Fingers auf der Berührungsbildschirmanzeige entspricht.

2. Die Vorrichtung gemäß Anspruch 1, wobei die Steuerschaltung konfiguriert ist zum Bewirken einer Cursor-basierten Auswahlaktion bei einem Erfassen einer momentanen Berührung auf der Berührungsbildschirmanzeige.

3. Die Vorrichtung gemäß Anspruch 1, wobei die Steuerschaltung konfiguriert ist zum Bewirken einer Mehrfachberührungsgeste, wenn sich die zwei Finger außerhalb des vorgegebenen Bereichs voneinander bewegen.

4. Die Vorrichtung gemäß Anspruch 3, wobei die Mehrfachberührungsgeste auf dem Cursor Positions-gemäß eingegeben wird.

5. Ein Verfahren, das aufweist:
an einer Steuerschaltung (101):
Interpretieren (203) einer ersten Berührungsbildschirm-basierten Aktion, die ein gleichzeitiges Berühren der Berührungsbildschirmanzeige mit zwei beabstandeten Fingern innerhalb eines vorgegebenen Bereichs voneinander als eine Cursor-Steueranweisung aufweist;
**dadurch gekennzeichnet, dass**:
die Cursor-Steueranweisung ein Anzeigen eines Cursors zwischen den zwei Fingern umfasst, die die Berührungsbildschirmanzeige berühren; und
der Cursor auf der Berührungsbildschirmanzeige bewegt wird, wenn einer der zwei Finger von der Berührungsbildschirmanzeige angehoben wird und der verbleibende Finger dann auf der Berührungsbildschirmanzeige bewegt wird, wobei die Bewegung des Cursors der Bewegung des verfolgten Fingers auf der Berührungsbildschirmanzeige entspricht.

6. Das Verfahren gemäß Anspruch 5, das weiter aufweist:
Bewirken einer Cursor-basierten Auswahlaktion bei einem Erfassen einer momentanen Berührung auf der Berührungsbildschirmanzeige.

7. Das Verfahren gemäß Anspruch 5, das weiter aufweist:
Durchführen einer Kalibrierungsaktivität, um zumindest teilweise den vorgegebenen Bereich zu bestimmen.

## Revendications

1. Appareil comprenant :
un afficheur à écran tactile (102) ;
un circuit de commande (101) fonctionnellement relié à l'afficheur à écran tactile, dans lequel le circuit de commande est configuré pour :
interpréter (203) une première action de type tactile consistant à toucher simultanément l'afficheur à écran tactile au moyen de deux doigts espacés l'un de l'autre d'une distance prédéterminée en tant qu'instruction de commande de curseur ;
**caractérisé en ce que**
l'instruction de commande de curseur consiste à afficher un curseur entre les deux doigts qui touchent l'afficheur à écran tactile ; et
le circuit de commande est en outre configuré pour déplacer le curseur sur l'afficheur à écran tactile lorsque l'un des deux doigts est écarté de l'afficheur à écran tactile et lorsque le doigt restant est ensuite déplacé sur l'afficheur à écran tactile, le mouvement du curseur correspondant au mouvement du doigt poursuivi sur l'afficheur à écran tactile.

2. Appareil selon la revendication 1, dans lequel le circuit de commande est configuré pour effectuer une action de sélection à base de curseur lorsqu'il est détecté que l'afficheur à écran tactile est momentanément touché.

3. Appareil selon la revendication 1, dans lequel le circuit de commande est configuré pour effectuer un geste multi-tactile lorsque les deux doigts s'écartent de la distance prédéterminée l'un de l'autre.

4. Appareil selon la revendication 3, dans lequel le geste multi-tactile est verrouillé en position sur le curseur.

5. Procédé consistant,
au niveau d'un circuit de commande (101), à :
interpréter (203) une première action à base d'écran tactile qui consiste à toucher simultanément l'afficheur à écran tactile au moyen de deux doigts espacés l'un de l'autre d'une distance prédéterminée en tant qu'instruction de commande de curseur ;
**caractérisé en ce que**
l'instruction de commande de curseur consiste à afficher un curseur entre les deux doigts qui touchent l'afficheur à écran tactile ; et
le curseur est déplacé sur l'afficheur à écran tactile lorsque l'un des deux doigts est écarté de l'afficheur à écran tactile et lorsque le doigt restant est ensuite déplacé sur l'afficheur à écran tactile, le mouvement du curseur correspondant au mouvement du doigt poursuivi sur l'afficheur à écran tactile.

6. Procédé selon la revendication 5, consistant en outre à :
effectuer une action de sélection à base de curseur lorsqu'il est détecté que l'afficheur à écran tactile est momentanément touché.

7. Procédé selon la revendication 5, consistant en outre à :
réaliser une activité d'étalonnage pour déterminer, au moins en partie, la distance prédéterminée.
